Europäisches Patentamt

European Patent Office

Office européen des brevets

(19)

(11) Publication number: **0 160 099**
**A1**

(12)
## EUROPEAN PATENT APPLICATION
published in accordance with Art. 158(3) EPC

(21) Application number: 84903815.3

(22) Date of filing: 19.10.84

Data of the international application taken as a basis:

(86) International application number:
PCT/JP84/00497

(87) International publication number:
WO85/01808 (25.04.85 85/10)

(51) Int. Cl.⁴: **G 05 B 19/403**
B 23 Q 15/00, B 23 P 1/08

(30) Priority: 21.10.83 JP 197264/83

(43) Date of publication of application:
06.11.85 Bulletin 85/45

(84) Designated Contracting States:
CH DE GB LI

(71) Applicant: FANUC LTD
3580, Shibokusa Aza-Komanba Oshino-mura
Minamitsuru-gun Yamanashi 401-05(JP)

(72) Inventor: MATSUI, Mitsuo
12-17, Higashi Nakano 1-chome Nakano-ku
Tokyo 164(JP)

(72) Inventor: YUKUTOMO, Masashi
10-5, Nishihashimoto 1-chome Sagamihara-shi
Kanagawa 229(JP)

(74) Representative: Billington, Lawrence Emlyn et al,
HASELTINE LAKE & CO Hazlitt House 28 Southampton
Buildings Chancery Lane
London WC2A 1AT(GB)

(54) METHOD OF RETRIEVING CODED INSTRUCTIONS FOR A MACHINING SYSTEM.

(57) Method of retrieving coded instructions for a machining system which includes a working machine (EDM), a numerical controller (102) which controls the working machine, and a memory (102c) which stores coded instructions for the working machine. The memory (102c) is provided with regions (PM) for storing comment sentences corresponding to the coded instructions. The comment sentences are registered in the corresponding regions (PM) before machining is effected. When a comment sentence is input, the coded instructions corresponding to the input comment sentence are read out.

Fig. I

INCOMPLETE DOCUMEN'

EP 0 160 099 A1

-1-

## DESCRIPTION

MACHINING CONDITION RETRIEVAL METHOD OF

MACHINING SYSTEM

### Technical Field

This invention relates to a machining condition retrieval method for retrieving, in order to command or display, machining conditions registered in a numerically controlled machine tool such as a numerically controlled electric discharge machine. More particularly, the invention relates to a machining condition retrieval method whereby desired machining conditions can readily be called from among a large number of registered machining conditions.

### Background Art

Progress in automating manufacturing processes has become quite remarkable and a variety of machine tools have been placed under numerical control in recent years. Such machine tools are so adapted that various machining conditions can be designated in accordance with the workpiece (part) to be machined. This allows machining to be performed under machining conditions most suitable for a variety of workpieces. On the other hand, since optimum machining conditions are in many cases determined based on the experience of on-site workers or designers, optimum machining conditions cannot be set by just anyone. Modern machine tools are arranged so that various machining conditions may be registered in advance and externally in the manufacture of a workpiece are capable of being recalled, the machining conditions cannot be called unless one knows what they were at the time the workpiece was machined. Accordingly, a problem with the prior art is that it does not necessarily enable anyone to use the optimum machining conditions.

Disclosure of the Invention

The present invention has been devised to eliminate the foregoing problems of the prior art and has as its object to provide a machining condition retrieval method of a machining system whereby desired machining conditions can readily be called from among a large number of registered machining conditions.

According to the present invention, there is provided a machining condition retrieval system in a machining system having a machine tool for subjecting a workpiece to desired machining, a numerical control manufacture (sic) for numerically controlling the machine tool, and a memory for storing a plurality of machine tool machining conditions. The memory is provided with a comment statement storage area for storing comment statements corresponding to the machining conditions, comment statements corresponding to the machining conditions are registered in the comment statement storage area, and corresponding machining conditions are called by entering the comment statements.

Provision of the present invention enables desired

0160099

machining conditions to be called with facility by entering comment statements registered so as to correspond to a large number of machining conditions stored in memory.

Therefore, according to the present invention, management of machining conditions is facilitated to improve upon the problem of the prior-art system, namely the fact that even though many machining conditions have been expressly registered, the conditions are not fully utilized because of the poor operability of the system. In particular, if the name of a machined part and an order number are registered in advance for a comment statement, this will allow machining conditions to be designated. This is very convenient and enables wider utilization of machining conditions. In addition, the present invention can be realized through a comparatively simple method, namely the registration of the comment statements. Accordingly, the present invention has important practical advantages.

Brief Description of the Drawings

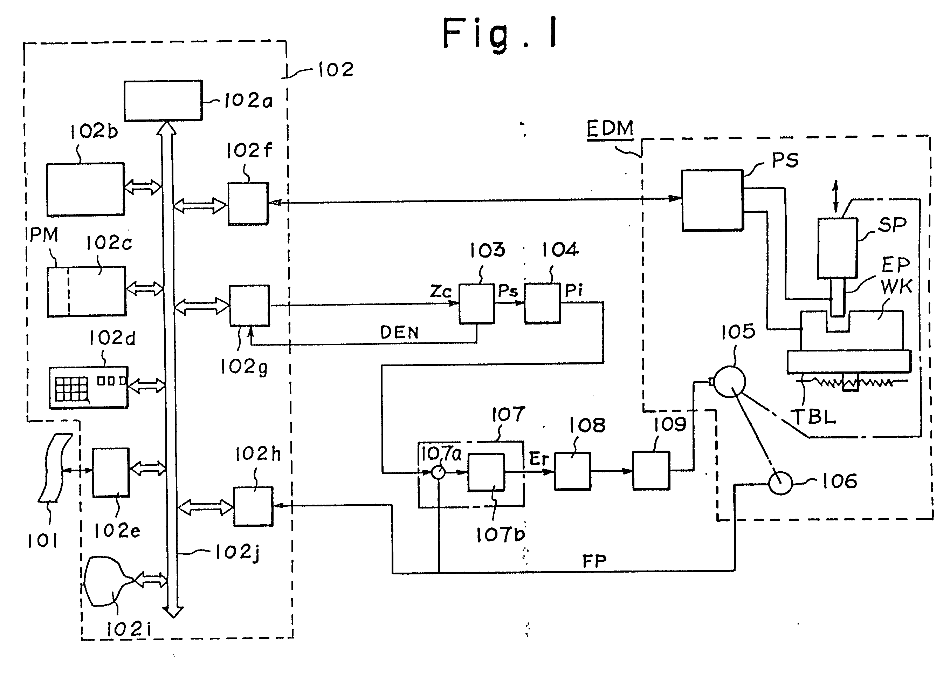

Fig. 1 is a block diagram showing an embodiment of a machining system to which the present invention is applied, Fig. 2 is a view for describing an example of a display on a display unit according to the arrangement of Fig. 1, and Fig. 3 is a view showing data stored in a memory in the arrangement of Fig 1.

Best Mode for Carrying Out the Invention

**0160099**

For a more detailed explanation of the present invention, a description will now be had with reference to the accompanying drawings.

Fig. 1 is a block diagram showing a numerically controlled (NC) die milling electric discharge machining system to which the present invention is applied. In the Figure, numeral 101 denotes a paper tape bearing punched numerical control (NC) command data for controlling an electric discharge machine EDM, described below. Stored on the paper tape 101 are positioning information for machining, and NC command data such as M-, S- and T-function information. Numeral 102 designates a numerical control unit for controlling the electric discharge machine EDM on the basis of the NC command data stored on the paper tape. The numerical control unit 102 reads NC data from the paper tape, decodes the data and sends a control signal to the side of the electric discharge machine EDM through a magnetics panel, not shown, if read NC data is indicative of, e.g., an M-, S- or T-function command, and sends an output signal to a pulse distributor, which is the next stage, if read data is a move command Zc. The NC unit 102 is composed of a processor 102a for executing processing in accordance with a control program, a program memory 102b for storing a predetermined machining program, a data memory 102c for storing data, an operator's panel 102d for control, a tape reader/puncher 102e for punching NC

data into a paper tape when the NC data are read from the paper tape 101, input/output ports 102f, 102g, a present position counter 102h, a display unit 102i, and an address/data bus 102j for interconnecting these units.

The program memory 102b is constituted by a read-only memory (ROM) or non-volatile memory and stores a numerical control program for controlling a machine. For an electric discharge machine, by way of example, the program memory 102b will store a machining control program for executing control of machining electrode feed, table feed and machining voltage, etc. The machining control program naturally includes a program for retraction control in addition to one for machining advance control. The data memory 102c is constituted by a non-volatile memory and, in addition to storing the NC data (machining position data, etc.) on the paper tape 101, also stores machining conditions and the like in an area PM. The area PM of the data memory 102c, which is arranged as shown in Fig. 3, stores machining conditions (machining voltage N, machining current G, on-time X, duty factor Y, etc.) corresponding to respective command codes, and is also provided with comment statement storing areas.

It should be noted that other machining conditions, such as the abovementioned unloaded voltage, high-voltage superposition in/out, feed velocity, can be registered to supplement registered machining conditions.

The electric discharge machine EDM has a table TBL on which a workpiece WK is placed, a machining electrode EP, serving as a punch, supported by a spindle SP disposed above the table TBL, a servomotor 105 for feeding the machining electrode EP in the direction of the arrow to machine the workpiece WK, and a power supply PS for supplying power across the machining electrode EP and workpiece WK.

The table TBL is arranged to be driven in X and Y directions by X- and Y-axis servomotors, not shown. The electrode PS is connected to the input/output port 102f of the NC unit 102 and is arranged to conduct in accordance with a designated machining voltage, machining current on-time and duty factor. Accordingly, when the electrode is fed for machining while a small gap is maintained between the workpiece WK and electrode EP, the workpiece WK is machined into a shape identical with that of the electrode EP. By controlling the machining pulses, energy and the like, the dimensions to which the workpiece WK is to be machined can be enlarged with ease. Furthermore, if machining is performed while the electrode EP is moved eccentrically when so required, the area machined can be expanded so that the workpiece WK can be machined to any desired dimensions.

Described next will be control circuitry of the servomotor 105 for feeding the machining electrode EP

0160099

in the electric discharge machine EDM on the basis of the move command Zc, which is a control signal produced by the NC unit 102.

When a pulse distributor 103 receives the move command Zc from the NC unit 103, the pulse distributor executes a well-known pulse distribution calculation based on the move command Zc to generate distributed pulses Ps of a frequency dependent upon a commanded velocity. Numeral 104 designates a known acceleratordecelerator circuit which generates a train of pulses Pi by rectilinearly accelerating the pulse rate of the train of distributed pulses from the pulse distributor 103 at the occurrence of this pulse train, and rectilinearly decelerating the same at the end thereof. Numeral 106 denotes a pulse coder for generating one feedback pulse FP each time the servomotor rotates by a predetermined amount. Numeral 107 denotes an error calculating and storing unit constituted by, e.g., a reversible counter, for storing a difference Er between the number of input pulses Pi received from the accelerator/decelerator circuit 104 and the number of feedback pulses FP. As illustrated, the error calculating and storing unit 107 may be constructed of an arithmetic circuit 107 for calculating the difference Er between Pi and FP, and an error register 107b for storing Er. More specifically, assuming that the servomotor 105 is rotating in accordance with a command for rotation in the forward direction, the error calculating and storing unit 107 counts up the input pulse Pi each time the pulse Pi is generated, counts itself down each time the feedpack pulse FP is generated, and stores the difference Er between the number of input pulses and the number of feedback pulses in the error register 107b. Numeral 108 represents a digital-to-analog (DA) converter for generating an analog voltage proportional to the status of the error register 107b. Numeral 109 designates a velocity control circuit. The AD converter 108 and the velocity control circuit 109 construct the drive circuitry of the servomotor 105.

The operation of the arrangement embodied in Fig. 1 will now be described.

First, before machining starts, the NC unit 102 causes the tape reader/puncher 102e to read NC data from the paper tape 101 and stores the NC data on the paper tape 101 in the data memory 102c via the bus 102j. Next, a start command is applied to the processor 102a via the bus 102j by manipulating the operator's panel 102d. When this is done, the processor 102a sequentially reads and executes the machining control program in the program memory 102b. More specifically, the processor 102a reads the NC data stored in the data memory 102c, calls a designated machining condition in the area PM from a machining condition command code contained in the NC data, and notifies the power supply PS of the machining condition

0160099

by way of the input/output port 102f. In response, the power supply PS operates to pass a current in accordance with the designated machining condition.

Further, the processor 102a uses the NC data to produce an X-axis move command Xc and a Y-axis move command Yc for moving the table TBL in the X and Y directions, and delivers these commands to a table drive unit through an input/output port, not shown, thereby positioning the table TBL.

Though not shown in Fig. 1, the machining system has, for both the X and Y axes, an arrangement similar to the control circuitry present in the loop extending from the input/output port 102g to the servomotor 105. The processor 102a likewise produces the Z-axis move command Zc and delivers M-, S- and T-function instructions to the machine side via the input/output port 102f. When the move command Zc is applied from the input/output port 102g to the pulse distributor 103, the latter produces the distributed pulses Ps by executing the pulse distribution calculation on the basis of the move command Zc. Upon receiving the distributed pulses Ps, the accelerator/decelerator circuit 104 accelerates and decelerates the pulse rate thereof and applies the train of command pulses Pi to the error calculating and storing unit 107. Since the status of the error register 107b will thus become non-zero, the DA converter 108 produces an output voltage and the motor 105 is driven by the velocity control circuit 109 to move the electrode EP. When the motor 109 has rotated by a predetermined amount, the feedback pulse FP is generated by the pulse coder 106 and is applied to the error calculating and storing unit 107. The difference Er between the number of command pulses Pi and the number of feedback pulses FP is thus stored in the error register 107b. Thenceforth, the motor 105 is servo-controlled in such a manner that the error Er becomes zero, with the electrode EP being fed for machining and moved to the target position.

When the electrode EP is being fed for machining, a short-circuit signal SS is generated upon contact between the electrode EP and the workpiece. The short-circuit signal SS arrives an input/output port, not shown, and is communicated to the processor 102a via the bus 102j. The processor 102a interrupts execution of a machining feed control program in the machining control program and then reads and executes the retraction control program of the program memory 102b. That is, after the present position recorded in the present position counter 102h is stored in the data memory 102c, the processor 102a reads retraction control parameters out of the data memory 102c, produces a retraction move command and delivers the retraction move command to the pulse distributor 103 in order to retract the electrode EP. As a result, the pulse distributor 103 generates retraction pulses BS

0160099

for movement in the opposite direction, so that the status of the error register 107b becomes zero after a predetermined length of time. Thereafter, the electrode EP is retracted by the retraction pulses to break contact with the workpiece.

When contact between the electrode EP and workpiece is broken, the short-circuit signal SS vanishes. When the processor 102a senses this through the input/output port 102f, the processor readvances the electrode EP. To accomplish this, the processor 102a delivers a readvance move command Zc to the pulse distributing circuit 103 via the bus 102j and input/output port 102g for returning the electrode at a readvance velocity to the present position stored in the data memory 102c. The electrode EP is thus advanced to the former position and fed to perform machining.

The electric discharge machine EDM thus subjects the workpiece WK to electric discharge machine in accordance with the designated machining conditions.

The manner in which machining conditions are registered in the area PM of the data memory 102c will now be described. The machining conditions are punched in the paper tape 101 and read by the tape reader/puncher 102e, or are entered directly from a device having an RS232 interface, not shown, or from a keyboard on the operator's panel 102d. Comments are also entered at this time in addition to the ordinary machining conditions. As to the format of a comment statement, the statement is enclosed by control-out and control-in symbols "(", ")", respectively, in accordance with NC data standards, and is decided so as not to have an effect upon ordinary NCs or NCs not having a comment-based retrieval and command function.

Machining conditions and comment statements thus entered are registered in the area PM of the data memory 102c, as shown in Fig. 3. Note that the area PM can be obtained by providing the power supply PS with a memory and storing the data in this memory. When the name of a machined part, a part code, an order number and the like are used in a comment statement, such information and the machined part name can be retrieved and commanded in a manner described below.

To utilize machining conditions thus registered, machining condition command codes or command statements are included as NC commands on the abovementioned NC tape 101. If this is done, the processor 102a may retrieve the area PM of the data memory 102c by the command code or comment statement, call the corresponding machining condition and command the power supply PS to operate in accordance with this condition. If the machined part name, part code, order number or the like have been registered in a comment statement as mentioned above, great convenience can be achieved because machining conditions can be designated by, e.g., the machined part name when an identical part is to be subjected to electrical discharge machining at a later date.

When it is necessary for the operator to know a command code of a machining condition in order to designate the corresponding machining condition by the command code, the operator enters the comment statement from the operator's panel 102d. When this is done, the processor 102a reads the command code corresponding to the entered comment statement out of the area PM of the memory 102c and causes the code to be displayed on the display unit 102i, as shown in Fig. 2. Thus, the operator is informed of the corresponding command code and punches the command code in the NC tape. Since the contents of a comment statement can be freely described, there are occasions where identical comment statements exist. In such case, a plurality of machining conditions of identical comment statements are retrieved from the area PM of the memory 102c and the display unit 102i displays a plurality of command codes corresponding to the comment statements, as well as the machining conditions. Note that the command codes and comment statements can be entered from the operator's panel 102d rather than from the NC tape. Though the present invention has been described based on the illustrated embodiment, the invention is not limited to the illustrated embodiment but can be modified in various ways without departing from the scope of the claims.

## Industrial Applicability

Thus, in a numerically controlled machining system, the present invention enables machining conditions stored in a memory to be called by both a command code and a comment statement, as set forth above. Accordingly, the invention is well-suited for retrieving machining conditions in an electrical discharge machining system or the like having a very large number of machining conditions. This system is applicable to wire-cut electric discharge machines and to other numerically controlled machine tools.

0160099

CLAIMS:

1.  In a machining system having a machine tool for subjecting a workpiece to desired machining, a numerical control unit for numerically controlling said machine tool, and a memory for storing a plurality of machining conditions of said machine tool, a machining condition retrieval method of a machining system charactacterized by providing said memory with a comment statement storage area for storing comment statements corresponding to said machining conditions, registering comment statements, which correspond to said machining conditions, in said comment statement storage area, and calling corresponding machining conditions by entering the comment statements.

2.  A machining condition retrieval method of a machining system according to claim 1, characterized in that the comment statement storage area is provided in a data memory of the numerical control unit.

3.  A machining condition retrieval method of a machining system according to claim 1, characterized in that the comment statement storage area is provided in a memory arranged in a power supply unit of the machine tool.

4.  A machining condition retrieval method of a machining system according to claim 1, 2 or 3, characterized in that the machine tool is an electric discharge machine.

# Fig. 1

0160099

# INTERNATIONAL SEARCH REPORT

International Application No. PCT/JP84/00497

## I. CLASSIFICATION OF SUBJECT MATTER (if several classification symbols apply, indicate all) [3]

According to International Patent Classification (IPC) or to both National Classification and IPC

$$\text{Int.Cl}^3 \quad \text{G05B 19/403, B23Q 15/00, B23P 1/08}$$

## II. FIELDS SEARCHED

| Minimum Documentation Searched [4] | |
|---|---|
| Classification System | Classification Symbols |
| IPC | G05B 19/403, 19/405, 19/18, B23P 1/08 |

| Documentation Searched other than Minimum Documentation to the Extent that such Documents are Included in the Fields Searched [6] | |
|---|---|
| Jitsuyo Shinan Koho | 1956 – 1984 |
| Kokai Jitsuyo Shinan Koho | 1971 – 1984 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| A | JP, A, 58-29577 (Mitsubishi Electric Corp.) 21 February 1983 (21. 02. 83) | |
| A | JP, A, 55-72205 (Takara Seisakusho Kabushiki Kaisha) 30 May 1980 (30. 05. 80) | |
| A | JP, A, 54-13096 (Mitsubishi Electric Corp.) 31 January 1979 (31. 01. 79) | |

\* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| December 4, 1984 (04. 12. 84) | December 17, 1984 (17. 12. 84) |
| International Searching Authority [1] | Signature of Authorized Officer [20] |
| Japanese Patent Office | |

Form PCT/ISA/210 (second sheet) (October 1981)